# EUROPEAN PATENT SPECIFICATION

(11) **EP 1 619 981 B1**
(45) Date of publication and mention of the grant of the patent: **31.01.2007**
(21) Application number: 04722256.7
(22) Date of filing: 22.03.2004
(51) Int. Cl.: A47J 19/02

(54) **DOMESTIC APPLIANCE FOR THE PROCESSING OF ALIMENTARY PRODUCTS**
HAUSHALTSGERÄT FÜR DIE VERARBEITUNG VON NAHRUNGSMITTELPRODUKTEN
APPAREIL ELECTROMENAGER POUR LA TRANSFORMATION DES ALIMENTS

(30) Priority: 07.05.2003 IT MI20030917
(43) Date of publication of application: 01.02.2006
(73) Proprietor: Ariete S.p.A., 59100 Macrolotto (Prato) (IT)
(72) Inventor: ROSA, Carlo, I-23900 Lecco (IT)
(74) Representative: Rapisardi, Mariacristina
(86) International application number: PCT/EP2004/002974
(87) International publication number: WO 2004/098357

(56) References cited:
- EP-A- 0 623 301
- US-A- 2 315 018
- US-A- 3 566 939
- US-A- 4 106 401
- US-B1- 6 363 837

## Description

The present finding refers to a domestic appliance for the processing of alimentary products.

A domestic appliance according to the preamble of claim 1 is known from US-A-3 566 939.

It is known that the present domestic appliances for the processing of alimentary products, such as for example the citrus fruit squeezers, the blenders, the centrifugal machines and still others, each have a base body containing a motorised device on which the specific device for the processing of the alimentary product is then placed.

Consequently, for each processing of an alimentary product, a corresponding, suitable processing device must be available.

The above, as is easily understood, implies the considerable occupation of space in the area where the different domestic appliances are stored and, above all, the possibility to use one domestic appliance at a time as required without being able to use several appliances at the same time: for example, to obtain the combination of several processed alimentary products in producing composite drinks such as the multivitamin drinks with particular organoleptic properties, in that they are composed of fruit and/or vegetables or other items processed by way of squeezing and/or centrifugation and/or blending and/or mincing and so on.

In fact, if it is desired to obtain a composite drink it would be necessary to selectively employ two or more domestic appliances and then transfer the alimentary product obtained from the individual appliances into one single container, thereby producing the pre-selected drink.

Consequently, the user should operate each domestic appliance according to its specific working modes (working speed, accessory type, etc.) thus rendering the production processes of the desired drink or alimentary product even more laborious and complex.

Moreover, the user should employ a collection container of the processed alimentary product for each domestic appliance in use, and pour out the contents of each container into a single receptacle in order to prepare the requested drink or alimentary product.

In addition, another inconvenience which arises is that due to the placement of the various containers in proximity to the various processing devices, in order to avoid that the processed alimentary product partially escapes from the container, dirtying the work surface.

In fact, such placement usually remains entirely arbitrary and depends on the household appliance user's skill. The above outline makes it easy to understand how, in order to prepare for example a multivitamin drink composed of a mixture of vegetables and/or fruit processed in different ways, such as by squeezing, centrifuge, blending and/or mincing, it is necessary to employ different appliances, all connected to the network power supply, each having its own particular operation technique as well as different containers rendering the entire operation extremely complicated.

The proposed task of the present finding is to eliminate the abovementioned drawbacks which are inherent to domestic appliances of the known type.

With regards to this task, an important object of the finding is to make a domestic appliance for the processing of alimentary products which permits the simultaneous processing of several alimentary products, allowing the direct pouring into a single container or in several different containers according to the specific needs.

Another object of the finding is to make a domestic appliance for the processing of alimentary products which allows the abovementioned operations to be executed in a swift and optimal manner due to the fact that the collection containers of the processed alimentary products can be arranged in a precise way with respect to their specific processing devices.

An additional object of the finding is to make a domestic device in which the processing devices of the alimentary products may be oriented in different positions with respect to each other thus facilitating the employment of different-size containers, also in relation with the quantity of the processed alimentary product and with the percentage of one product in the mixture with respect to that of another desired product.

Last but not least object of the finding is to make a domestic apparatus which is aesthetically pleasing but also compact in order to reduce the occupied space, and which, in addition, may permit the simultaneous or selective operation of the processing devices as required by way of the same working techniques and with the possibility to share the accessories of each processing device with those of the other.

This task along with these and other objects are achieved by a domestic appliance for the processing of alimentary products comprising a base body supporting at least a first and a second device for processing alimentary products, each equipped with a first and second dispensing unit of said processed alimentary products, characterised in that said first and second dispensing units are oriented in order to present a dispensing direction along axes intersecting in a pre-determined point located in front of a seat present on said base body for the correct placement of at least one collection container of the processed alimentary products.

Further characteristics and advantages of the invention will be more evident from the description of a preferred though not exclusive embodiment of the domestic appliance for the processing of alimentary products according to the finding illustrated for indicative and not limiting purposes in the attached drawings, in which:

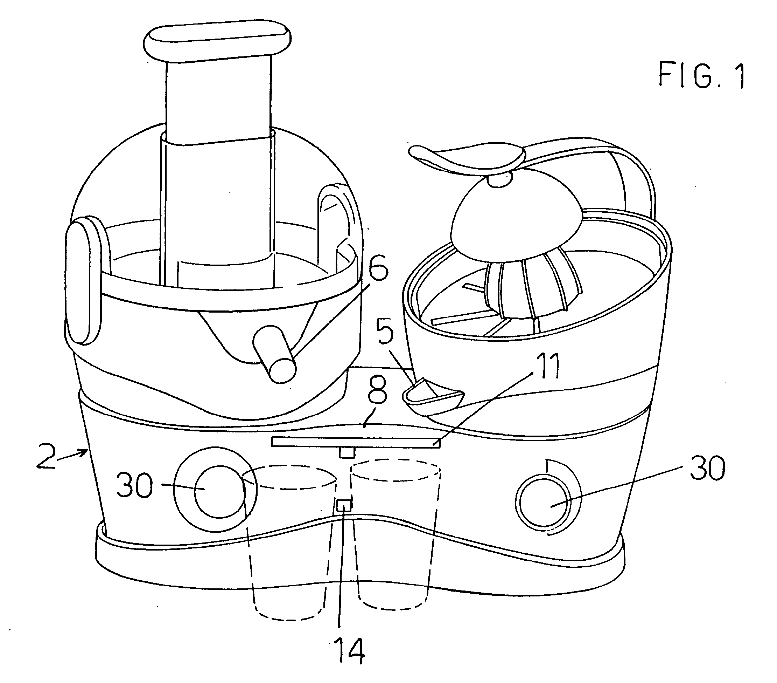

- figure 1 is a perspective view of the domestic appliance according to the finding;

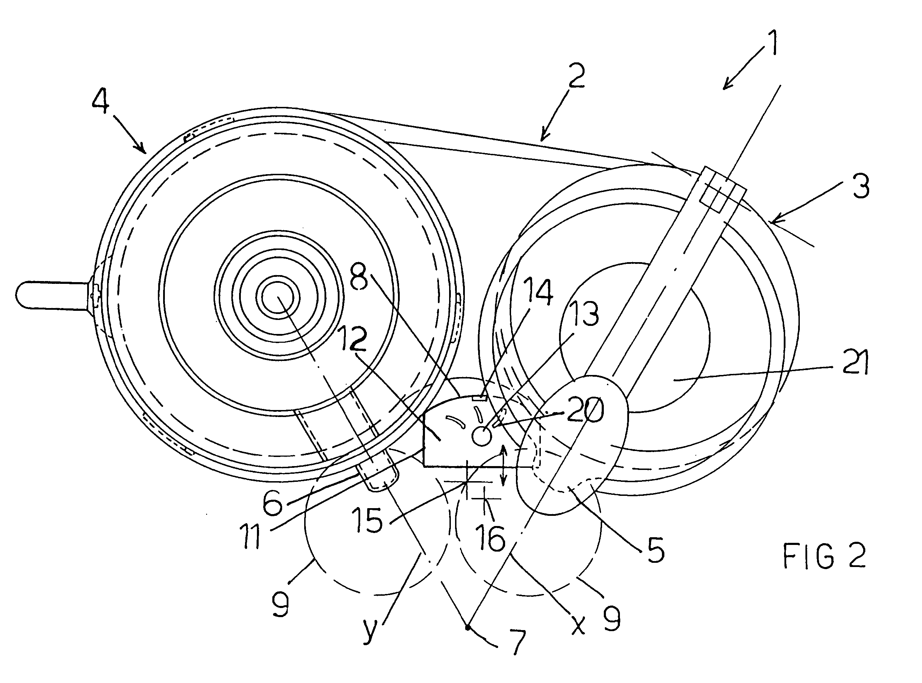

- figure 2 is a top view of the domestic appliance according to the finding;

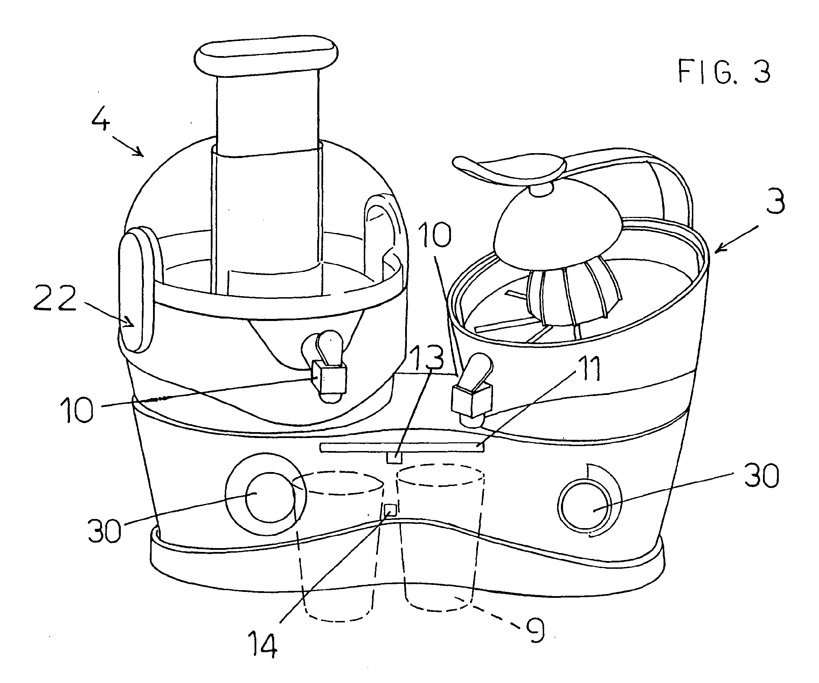

- figure 3 shows the possibility of using taps for the controlled dispensing of the processed products;

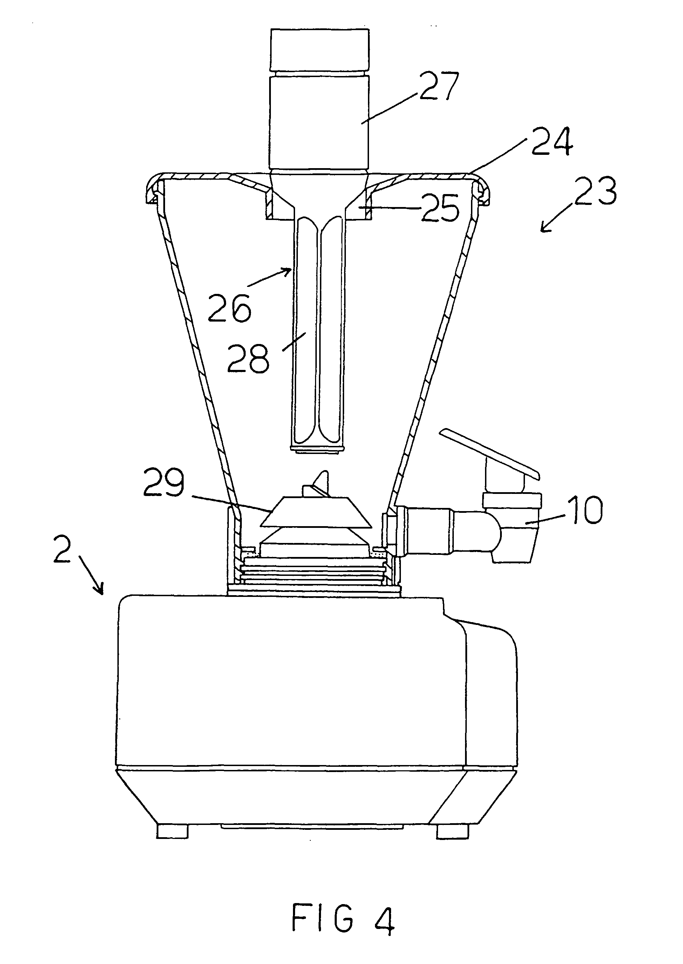

- figure 4 is an elevated side view of the appliance with mounted blender according to the finding in place of the centrifuge depicted in fig. 1

With particular reference to the above-described figures the domestic apparatus for the processing of alimentary products, indicated in its entirety by the reference number 1, comprises a base body 2 bearing at least a first and a second device for processing alimentary products, each indicated by 3 and 4 respectively. Each processing device is equipped with a first and second dispensing unit 5 and 6 of said processed alimentary products.

The first and second dispensing units 5 and 6 are advantageously oriented in order to present a dispensing direction of the processed product along the axes x and y at their pre-determined intersection point 7.

In particular the point 7 is placed in front of a seat 8 present on the base body 2 suitable to allow the correct placement of a container 9 or several collection containers of processed alimentary products.

In particular the seat 8 is arranged on the base body 2 between the first and second processing device so that each dispensing unit is substantially facing the other and is oriented toward the container(s) 9.

Either one or both first and second processing devices 3 and 4 suitably comprises a unit which intercepts said processed alimentary products such as for example a tap 10 in order to allow the user to dispense the desire amount of the processed product.

In a structural variation the domestic appliance comprises means for hydraulic connection of said first and second dispensing units 5 and 6 and in particular a drawer 11 having a collection surface 12, to collect alimentary products coming from the first and second dispensing unit and equipped with a single exit opening 13.

The collection surface 12 has curved beads 20 suitable for mixing the liquid before it passes through the opening 13, which may be provided with a filter unit (not described).

The seat 8 may advantageously have a proximity sensor 14 capable of detecting the presence or lack thereof of container(s) 9 in order to permit or not permit the dispensing of said processed alimentary products through the taps 10.

Since the containers are normally of cylindrical form, the seat 8 appropriately has a curvilinear shape with curvature centres 15 and 16 capable of receiving, as said, one or more even different-size containers. Still with the goal of rendering as flexible as possible the use of the appliance, the object of the finding, the first and second processing devices 3 and 4 comprise positioning means with the base body 2 in order to define for at least one or both of these at least two different angular positions, which may also be chosen in relation to the type and size of container used.

More precisely, the first processing device 3 comprises a citrus fruit squeezer having a slanting squeezing surface and/or collection surface.

The citrus fruit squeezer may comprise a bowl for the collection of said squeezed product, also equipped with a tap 10 and a pressing unit 21 of the alimentary product to be squeezed.

The second processing device 4 comprises a centrifuge 22 or, interchangeably, a blender 23.

The blender 23 has a cover 24 with opening 25 in which a rod 26 is housed, having an enlarged head 27 moveably engaged in said opening and a shank 28 which extends from said head inside said blender until within proximity of the blender blades 29, which slow the rotation of the product as they work.

Moreover, the blender may also have a tap 10.

The first and the second devices 3 and 4 advantageously have on/off means 30 for their simultaneous and selective operation.

The operation of the appliance according to the finding is evident from that described and illustrated.

In particular, after having mounted either the blender 23 or the centrifuge 22 on the body 2 the citrus fruit squeezer or centrifuge or blender is oriented as required and above all in accordance with the fact that the processed alimentary products must be dispensed in a single container 9 or in two containers 9 of the same or different size.

At this point the citrus fruit squeezer and/or the centrifuge or blender are simultaneously or selectively operated, the processed product collected in container(s) 9.

The dispensing signal will be given by detector 14, which senses the presence of the container(s) 9 by way of the possible taps 10.

In practice it is confirmed how the appliance according to the finding is particularly advantageous in that it presents increased flexibility of use even with single or multiple containers, above all in the preparation of drinks or products composed of different types of fruit, vegetables or other alimentary products.

The finding thus conceived is susceptible to numerous modifications and variants, all of which are covered by the inventive concept; moreover, all of the details can be replaced by technically equivalent elements.

In practice, the materials employed may be of any type or size, according to state of the art requirements.

## Claims

1. Domestic appliance for the processing of alimentary products comprising a base body supporting at least a first and a second device for the processing of alimentary products, each equipped with a first and a second dispensing unit of said processed alimentary products, said first and second dispensing unit being oriented in order to present a dispensing direction along axes intersecting in a pre-determined point located in front of a seat present on the base body for the correct placement of at least one collection container of said processed alimentary products,
**characterised in that** said first and second processing devices comprise positioning means in order to define for at least one of these at least two different angular positions on said base body.

2. Domestic appliance, according to claim 1, **characterised in that** said seat is arranged on said base body between said first and second processing devices.

3. Domestic appliance, according to one or more of the preceding claims **characterised in that** at least one of said first and second processing devices comprises a unit which intercepts said processed alimentary products.

4. Domestic appliance, according to one or more of the preceding claims **characterised in that** it comprises means for hydraulic connection of said first and second dispensing unit.

5. Domestic appliance, according to one or more of the preceding claims **characterised in that** said means for hydraulic connection comprise a drawer having a collection surface for said alimentary products coming from said first and second dispensing unit and equipped with a single exit opening.

6. Domestic appliance, according to one or more above the preceding claims **characterised in that** said exit opening is equipped with a filter unit.

7. Domestic appliance, according to one or more of the preceding claims **characterised in that** said seat has a proximity sensor to detect the presence or lack thereof of at least one said container and permit or not permit the dispensing of said processed alimentary products.

8. Domestic appliance, according to one or more of the preceding claims **characterised in that** said seat has a curvilinear shape.

9. Domestic appliance, according to one or more of the preceding claims **characterised in that** said first processing device comprises a citrus fruit squeezer.

10. Domestic appliance, according to one or more of the preceding claims **characterised in that** said citrus fruit squeezer comprises a planted squeezing and/or collection surface of the processed product.

11. Domestic appliance, according to one or more of the preceding claims **characterised in that** said citrus fruit squeezer comprises a bowl for the collection of said squeezed product equipped with a tap.

12. Domestic appliance, according to one or more of the preceding claims **characterised in that** said citrus fruit squeezer comprises a pressing unit of said alimentary product to be squeezed.

13. Domestic appliance, according to one or more of the preceding claims **characterised in that** said second processing device comprises a centrifuge.

14. Domestic appliance, according to one or more of the preceding claims **characterised in that** said second processing device comprises a blender.

15. Domestic appliance, according to one or more of the preceding claims **characterised in that** said blender has a cover with opening in which a rod is housed, having an enlarged head moveably engaged in said opening and a shank which extends from said head inside said blender.

16. Domestic appliance, according to one or more of the preceding claims **characterised in that** said shank extends until within proximity of the blades of said blender, which slow the rotation of the product as they work.

17. Domestic appliance, according to one or more of the preceding claims **characterised in that** said blender has a tap.

18. Domestic appliance, according to one or more of the preceding claims **characterised in that** said first and second devices have on/off means for their simultaneous and selective operation.

## Patentansprüche

1. Haushaltsgerät zur Verarbeitung von Lebensmitteln, welches einen Basiskörper umfasst, der zumindest eine erste und eine zweite Vorrichtung zur Verarbeitung von Lebensmitteln stützt, wobei jeder mit einer ersten und einer zweiten Verteilungseinheit für die besagten verarbeiteten Lebensmittel ausgestattet ist, wobei die besagte erste und zweite Verteilungseinheit so gerichtet ist, dass sie eine Verteilungsrichtung entlang Achsen aufweist, die sich in einem vorgegebenen Punkt schneiden, der sich gegenüber einem Sitz befindet, der im Basiskörper und zur richtigen Platzierung zumindest eines Aufnahmebehälters der besagten verarbeiteten Lebensmittel vorhanden ist, **dadurch gekennzeichnet, dass** die besagte erste und zweite Verarbeitungsvorrichtung Positionierungsmittel umfassen, um für zumindest eine dieser beiden zwei verschiedene Winkelpositionen an dem besagten Basiskörper zu schaffen.

2. Haushaltsgerät gemäß Anspruch 1, **dadurch gekennzeichnet, dass** der besagte Sitz auf dem besagten Basiskörper zwischen der besagten ersten und der besagten zweiten Verarbeitungsvorrichtung angebracht ist.

3. Haushaltsgerät gemäß einem oder mehrerer der vorhergehenden Ansprüche, **dadurch gekennzeichnet, dass** zumindest eine der besagten ersten und zweiten Verarbeitungsvorrichtung eine Einheit umfasst, welche die besagten verarbeiteten Lebensmittel auffängt.

4. Haushaltsgerät gemäß einem oder mehrerer der vorhergehenden Ansprüche, **dadurch gekennzeichnet, dass** es Mittel zur hydraulischen Verbindung der besagten ersten und zweiten Verteilungseinheit aufweist.

5. Haushaltsgerät gemäß einem oder mehrerer der vorhergehenden Ansprüche, **dadurch gekennzeichnet, dass** die besagten Mittel zur hydraulischen Verbindung eine Schublade umfassen, die eine Sammelfläche für die besagten Lebensmittel aufweist, die aus der besagten ersten und zweiten Verteilungseinheit kommen, und welche mit einer einzigen Ausgangsöffnung ausgestattet ist.

6. Haushaltsgerät gemäß einem oder mehrerer der vorhergehenden Ansprüche, **dadurch gekennzeichnet, dass** die besagte Ausgangsöffnung mit einer Filtereinheit ausgestattet ist.

7. Haushaltsgerät gemäß einem oder mehrerer der vorhergehenden Ansprüche, **dadurch gekennzeichnet, dass** der besagte Sitz einen Annäherungsschalter aufweist, der das Vorhandensein oder das Fehlen zumindest eines der besagten Behälter vernimmt und der es erlaubt, oder nicht, die besagten verarbeiteten Lebensmittel zu verteilen.

8. Haushaltsgerät gemäß einem oder mehrerer der vorhergehenden Ansprüche, **dadurch gekennzeichnet, dass** der besagte Sitz eine kurvenförmige Form aufweist.

9. Haushaltsgerät gemäß einem oder mehrerer der vorhergehenden Ansprüche, **dadurch gekennzeichnet, dass** die besagte erste Verarbeitungsvorrichtung eine Zitrusfruchtpresse umfasst.

10. Haushaltsgerät gemäß einem oder mehrerer der vorhergehenden Ansprüche, **dadurch gekennzeichnet, dass** die besagte Zitrusfruchtpresse eine schräge Presse und/oder eine Sammelfläche für das verarbeitete Produkt aufweist.

11. Haushaltsgerät gemäß einem oder mehrerer der vorhergehenden Ansprüche, **dadurch gekennzeichnet, dass** die besagte Zitrusfruchtpresse eine Schüssel zur Sammlung des besagten gepressten Produkts umfasst, die mit einem Hahn ausgestattet ist.

12. Haushaltsgerät gemäß einem oder mehrerer der vorhergehenden Ansprüche, **dadurch gekennzeichnet, dass** die besagte Zitrusfruchtpresse eine Presseinheit umfasst, um das besagte Lebensmittel auszudrücken.

13. Haushaltsgerät gemäß einem oder mehrerer der vorhergehenden Ansprüche, **dadurch gekennzeichnet, dass** die besagte zweite Verarbeitungsvorrichtung eine Zentrifuge aufweist.

14. Haushaltsgerät gemäß einem oder mehrerer der vorhergehenden Ansprüche, **dadurch gekennzeichnet, dass** die besagte zweite Verarbeitungsvorrichtung einen Mixer aufweist.

15. Haushaltsgerät gemäß einem oder mehrerer der vorhergehenden Ansprüche, **dadurch gekennzeichnet, dass** der besagte Mixer einen Deckel mit Öffnung aufweist, in der eine Stange sitzt, die einen vergrößerten Kopf hat, der beweglich in der besagten Öffnung sitzt, und einen Schaft, der vom besagten Kopf in den besagten Mixer ragt.

16. Haushaltsgerät gemäß einem oder mehrerer der vorhergehenden Ansprüche, **dadurch gekennzeichnet, dass** sich der besagte Schaft bis in die Nähe der Klingen des besagten Mixers erstreckt, was die Drehung des Produktes bei dessen Verarbeitung verlangsamt.

17. Haushaltsgerät gemäß einem oder mehrerer der vorhergehenden Ansprüche, **dadurch gekennzeichnet, dass** der besagte Mixer einen Hahn aufweist.

18. Haushaltsgerät gemäß einem oder mehrerer der vorhergehenden Ansprüche, **dadurch gekennzeichnet, dass** die besagte erste und zweite Vorrichtung eine Ein/Aus-Schaltung aufweisen für deren gleichzeitigen oder jeweils einzelnen Betätigung.

## Revendications

1. Appareil domestique pour le traitement de produits alimentaires comportant un corps de base soutenant au moins un premier et un second dispositif pour le traitement de produits alimentaires, chacun d'entre eux étant équipé d'une première et d'une seconde unité de distribution desdits produits alimentaires traités, lesdites première et seconde unités de distribution étant orientées de façon à présenter un sens de distribution le long d'axes se coupant dans un point prédéterminé situé en face d'un siège figurant sur le corps de base en vue du positionnement correct d'au moins un récipient de collecte desdits produits alimentaires traités.

2. Appareil domestique, selon la revendication 1, **caractérisé en ce que** ledit siège est aménagé sur ledit corps de base entre le premier et le second dispositif de traitement.

3. Appareil domestique, selon l'une ou plusieurs des revendications précédentes, **caractérisé en ce qu'**au moins l'un desdits premier et second dispositifs de traitement comporte une unité qui intercepte lesdits produits alimentaires traités.

4. Appareil domestique, selon l'une ou plusieurs des revendications précédentes, **caractérisé en ce qu'**il comporte des moyens pour la liaison hydraulique des première et seconde unités de distribution susdites.

5. Appareil domestique, selon l'une ou plusieurs des revendications précédentes, **caractérisé en ce que** lesdits moyens pour la liaison hydraulique comportent un tiroir ayant une surface de collecte pour lesdits produits alimentaires venant des première et seconde unités de distribution susdites et équipée d'une seule ouverture de sortie.

6. Appareil domestique, selon l'une ou plusieurs des revendications précédentes, **caractérisé en ce que** ladite ouverture de sortie est munie d'une unité de filtration.

7. Appareil domestique, selon l'une ou plusieurs des revendications précédentes, **caractérisé en ce que** ledit siège a un capteur de proximité pour détecter la présence ou le manque s'y rapportant d'au moins un desdits récipients et pour permettre ou ne pas permettre la distribution desdits produits alimentaires traités.

8. Appareil domestique, selon l'une ou plusieurs des revendications précédentes, **caractérisé en ce que** ledit siège a une forme curviligne.

9. Appareil domestique, selon l'une ou plusieurs des revendications précédentes, **caractérisé en ce que** ledit premier dispositif de traitement comporte un presse-agrumes.

10. Appareil domestique, selon l'une ou plusieurs des revendications précédentes, **caractérisé en ce que** ledit presse-agrumes comporte une surface inclinée de pressage et/ou collecte du produit traité.

11. Appareil domestique, selon l'une ou plusieurs des revendications précédentes, **caractérisé en ce que** ledit presse-agrumes comporte un bol pour la collecte dudit produit pressé muni d'un bouchon.

12. Appareil domestique, selon l'une ou plusieurs des revendications précédentes, **caractérisé en ce que** ledit presse-agrumes comporte une unité de pressage dudit produit alimentaire à presser.

13. Appareil domestique, selon l'une ou plusieurs des revendications précédentes, **caractérisé en ce que** ledit second dispositif de traitement comporte une centrifugeuse.

14. Appareil domestique, selon l'une ou plusieurs des revendications précédentes, **caractérisé en ce que** ledit second dispositif de traitement comporte un mélangeur.

15. Appareil domestique, selon l'une ou plusieurs des revendications précédentes, **caractérisé en ce que** ledit mélangeur a un couvercle avec une ouverture où est logée une barre, ayant une tête élargie emboîtée d'une façon mobile dans ladite ouverture et une tige qui s'étend depuis ladite tête à l'intérieur dudit mélangeur.

16. Appareil domestique, selon l'une ou plusieurs des revendications précédentes, **caractérisé en ce que** ladite tige s'étend jusqu'à proximité des lames dudit mélangeur, qui ralentissent la rotation du produit pendant qu'elles sont en fonction.

17. Appareil domestique, selon l'une ou plusieurs des revendications précédentes, **caractérisé en ce que** ledit mélangeur a un bouchon.

18. Appareil domestique, selon l'une ou plusieurs des revendications précédentes, **caractérisé en ce que** lesdits premier et second dispositifs ont des moyens en marche/arrêtés pour leur fonctionnement simultané et sélectif.
